Europäisches Patentamt

European Patent Office

Office européen des brevets

(19)

(11) Publication number: **0 434 190 A1**

## (12) EUROPEAN PATENT APPLICATION

(21) Application number: 90311077.3

(22) Date of filing: 10.10.90

(51) Int. Cl.5: **C09K 21/08, C10M 131/00**

The title of the invention has been amended (Guidelines for Examination in the EPO, A-III, 7.3).

(30) Priority: 25.10.89 GB 8924058

(43) Date of publication of application:
**26.06.91 Bulletin 91/26**

(84) Designated Contracting States:
**AT BE CH DE DK ES FR GB IT LI LU NL SE**

(71) Applicant: **IMPERIAL CHEMICAL INDUSTRIES PLC**
**Imperial Chemical House, Millbank**
**London SW1P 3JF(GB)**

(72) Inventor: **Goodyear, Gary**
**49 Somerville Close**
**Bromborough, Wirral L63 0PQ(GB)**
Inventor: **Harris, Simon James**
**Hoseley, Bank Cottages, Park Lane**
**Park Side, Rossett, Clwyd, LL0 0BY(GB)**

(74) Representative: **Stephenson, Kenneth et al**
**Imperial Chemical Industries PLC Legal**
**Department: Patents PO Box 6 Bessemer**
**Road**
**Welwyn Garden City Herts, AL7 1HD(GB)**

(54) Mineral oil composition containing a fire suppressant.

(57) A composition of matter comprising a transformer or insulating oil and, as a fire suppressant, an effective amount of a compound of the formula:
$XC_nF_{2n}CF_mY_{3-m}$
wherein X represents H, F, Cl or Br;
Y represents Cl or Br;
n is an integer of 5 to 11 and
m is an integer of 0 to 2.

EP 0 434 190 A1

## COMPOSITIONS OF MATTER

This invention relates to compositions of matter and more particularly to compositions containing mineral oils and organic fluorine compounds.

The use of mineral oils as coolants and/or insulants in items of electrical equipment, for example transformers and switchgear, is well established. In general, the oils have high boiling points but still have relatively low flash points.

When short circuiting occurs in the equipment, the resulting arc can ignite these oils resulting in an explosion and/or fire.

It has now been found that these hazards may be minimised by including certain organic fluorine compounds in the mineral oils.

Accordingly, the invention provides a composition of matter comprising a transformer or insulating oil and as a fire suppressant, an effective amount of a compound of the formula:

$XC_nF_{2n}CF_mY_{3-m}$     (1)

wherein X represents H, F, Cl or Br;
Y represents Cl or Br;
n is an integer of 5 to 11, and
m is an integer of 0 to 2.

Transformer or insulating oils suitable for use in the compositions of the invention have been fully described in the prior art and are usually mineral oils comprising complex mixtures of straight and branched chain alkanes and cycloalkanes. Specifications are given, for example in BS 148:1972 and ASTM D3487.

The compositions of the invention may contain a single compound of Formula 1 or a mixture of two or more such compounds. Preferred compounds of Formula 1 are those in which Y is Br, for example the perfluoroalkyl bromides. A particularly suitable compound is perfluorooctyl bromide.

The amount of compound of Formula 1 present in the compositions of the invention is suitably in the range from about 0.5% to about 7%, especially from about 2% to about 6%, on a weight basis. Such amounts are generally effective in significantly increasing the flash points of the oils. The possibility of using smaller or larger amounts of compounds of Formula 1 is not excluded however.

The invention is illustrated but not limited by the following Examples.

Example 1

Flash point analyses were carried out on two samples of transformer oil saturated with perfluorooctyl bromide (PFOB). The samples were prepared by shaking the mineral oil with PFOB until no more would dissolve. It is estimated that the solution contained between 2 and 6% by weight of PFOB. The flash points were initially measured using the ambient and high Setaflash flashpoint units.

The transformer oil (neat) had a flash point of 298° F (147.8° C)

The oil with PFOB was found not to have a flash point in this apparatus. The test flame was extinguished at approximately 190° F (87.8° C) and also when tested at 230° F (110° C).

A second sample of oil saturated with PFOB was tested in the Pensky-Martens Closed cup apparatus. Again, the flame was extinguished at around 200° F (93.3° C). The sample therefore did not have a flash point in this apparatus.

Example 2

Solutions were prepared containing 1, 2, 3, 4 and 5% by weight of PFOB in Castrol Insulating Oil. In no case could a flash point be detected using the Pensby-Martens closed cup apparatus.

The neat oil had a flash point of 290° F (143.3° C).

## Claims

1. A composition of matter comprising a transformer or insulating oil and, as a fire suppressant, an effective amount of a compound of the formula:
$XC_nF_{2n}CF_mY_{3-m}$     (1)
wherein X represents H, F, Cl or Br;
Y represents Cl or Br;
n is an integer of 5 to 11, and
m is an integer of 0 to 2.

2. A composition according to claim 1 wherein the compound of Formula 1 is a perfluoroalkyl bromide.

3. A composition according to claim 2 wherein the comopund of Formula 1 is perfluoro-octyl bromide.

4. A composition according to any preceding claim containing from about 0.5% to about 7% by weight of compound of Formula 1.

5. A composition according to claim 4 containing from about 2% to about 6% by weight of compound of Formula 1.

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | JAPANESE PATENT OFFICE, FILE SUPPLIER JAPS, Tokyo, JP; <br> & JP-A-63 281 310 (MITSUBISHI ELECTRIC CORP.) <br> * Whole abstract * | 1-4 | C 09 K 21/08 <br> C 10 M 131/00 |
| Y | US-A-4 806 276 (MAIER) <br> * Column 3, line 1 - column 4, line 6; claims 1-5 * | 1-4 | |
| Y | GB-A-2 125 076 (RHEEM AUSTRALIA LTD) <br> * Page 1, lines 70-75; claim 1 * | 1-4 | |
| A | DE-A-3 044 782 (PIRELLI S.p.A.) <br> * Page 3, lines 16-22 from top; page 9, lines 1-3 from the bottom; page 10, lines 1-6 from the top; claims * | 1-4 | |
| | | | **TECHNICAL FIELDS SEARCHED (Int. Cl.5)** <br><br> C 09 K <br> C 10 M |

The present search report has been drawn up for all claims

| Place of search | Date of completion of search | Examiner |
|---|---|---|
| The Hague | 12 January 91 | LEDER M. |